# EUROPÄISCHE PATENTSCHRIFT

(11) **EP 0 639 051 B1**
(45) Veröffentlichungstag und Bekanntmachung des Hinweises auf die Patenterteilung: **16.10.1996**
(21) Anmeldenummer: 93909908.1
(22) Anmeldetag: 06.05.1993
(51) Int. Cl.: A21C 13/02

(54) **VORRICHTUNG ZUM GAREN VON TEIGPORTIONEN**
DEVICE FOR LEAVENING PORTIONS OF DOUGH
DISPOSITIF PERMETTANT LA LEVEE DE PORTIONS DE PATE

(30) Priorität: 08.05.1992 DE 4215146
(43) Veröffentlichungstag der Anmeldung: 22.02.1995
(73) Patentinhaber: SEIDEL, Klaus, D-87439 Kempten (DE); DRUCKMILLER, Erwin, D-87616 Marktoberdorf (DE)
(72) Erfinder: SEIDEL, Klaus, D-87439 Kempten (DE); DRUCKMILLER, Erwin, D-87616 Marktoberdorf (DE)
(74) Vertreter: Popp, Eugen, Dr.
(86) Internationale Anmeldenummer: EP9301111
(87) Internationale Veröffentlichungsnummer: WO9322927

(56) Entgegenhaltungen:
- DE-A- 3 712 372
- FR-A- 2 194 109
- NL-A- 7 005 305
- "Vollautomatische Kopfmaschinen und Brötchenanlagen", FORTUNA der Firma Edmund Schröder Maschinenfabrik GmbH & Co. KG. "Formgebäck-Anlage COMPACT" der Firma G.L. Eberhardt GmbH

## Beschreibung

Die Erfindung betrifft eine Vorrichtung zum Garen von Teigportionen gemäß dem Oberbegriff des Anspruches 1.

Herkömmlich werden Teigportionen, z.B. zur Herstellung von Brötchen oder dgl., durch eine sog. Kopfmaschine in längliche Kästen eingelegt, in denen eine sog. Vorgärung stattfindet. Diese Kästen haben fünf oder mehr muldenartige Vertiefungen zur Aufnahme der Teigportionen. Üblicherweise werden die Kästen an den Stirnseiten gelenkig (um ihre Längsachse drehbar) mit zwei parallelen Transportketten verbunden. Die Transportketten werden durch Kettenräder gleichförmig angetrieben und umgelenkt. Durch Anordnung zahlreicher Kästen hintereinander wird ein gewünschter Durchsatz von Teigportionen pro Stunde durch einen sog. Vorgärschrank hindurch erreicht. Die verfahrensbedingte Verweilzeit im Vorgärschrank bestimmt dann das erforderliche Maschinenvolumen (siehe dazu "Vollautomatische Kopfmaschinen und Brötchen-Anlagen", FORTUNA der Firma Edmund Schröder Maschinenfabrik GmbH & Co. KG, Steffelstein, Bundesrepublik Deutschland, oder auch die "Formgebäck-Anlage COMPACT" der Firma G.L. Eberhardt GmbH, Gräfelfing bei München, Bundesrepublik Deutschland).

Nach dem Vorgären werden die Teigportionen in einer sogenannten Formstation durch niedergehende Stempel geprägt, gleichzeitig in die muldenartigen Vertiefungen der Vorgärkästen gedrückt und dabei in eine bestimmte Form gebracht. Unmittelbar danach werden in einer Wendestation die geformten Teigportionen oder Teiglinge auf flache Gärgutträger oder alternativ auf ein Gärgutband gestürzt, d.h. mit der Prägung nach unten abgelegt und in einen Endgärraum gebracht. Nach dem Endgaren werden die Teigportionen bzw. Teiglinge erneut um 180° gestürzt und gleichzeitig auf Backbleche abgelegt, auf denen sie dann in einen Backofen verbracht werden. Die feste Aufhängung der Vorgärkästen an Transportketten, welche um die geforderte Vorgärzeit, z.B. etwa 8 Minuten, und den Durchsatz sicherzustellen, mehrfach im Vorgärschrank hin und her geführt werden müssen, führt zu einem großen Maschinenvolumen mit toten Räumen und hohen Montagekosten. Auch ist die Reinigung der in der Regel nicht entnehmbaren Vorgärkästen schwierig und hygienisch unbefriedigend.

Da die Vorgärkästen mit der Zeit vom Teig feucht werden, muß bei nicht entnehmbaren Vorgärkästen darüber hinaus die Anlage von Zeit zu Zeit zum Trocknen stillgesetzt werden. Dies bedeutet, daß der in den Herstellerunterlagen angegebene Durchsatz in der Praxis meist nicht erreicht wird. Zur Vermeidung derartiger Stillegungszeiten ist es üblich, den Teig durch chemische Zusätze trockenzuhalten. Es ist augenscheinlich, daß diese Methode nicht sehr akzeptabel ist.

Ferner müssen bei herkömmlichen Anlagen nach der Endgärzeit von etwa 20 Minuten die Gärgutträger einzeln in mühsamer Handarbeit auf die Bleche gestürzt werden.

Bekannt ist ein Sack- und Dörrofen (DE-PS 549 132), bei dem auf- und abwärts bewegbare, Stapel bildende Backkästen nacheinander durch einen Gärräum, einen Vorbackraum und einen Ausbackraum hindurch geführt werden. Die Backkästen werden durch eine Öffnung in den Backofen eingeschoben und in der untersten Position eines sich nach oben bewegenden Backkastenstapels positioniert. Der oberste Backkasten des sich nach oben bewegenden Backkastenstapels wird nach jedem Hubvorgang zu einem hinteren, sich nach unten bewegbaren Backkastenstapel verschoben, und der unterste Kasten dieses Stapels wird aus dem Ausbackraum entnommen.

Ein derartiger Back- und Dörrofen eignet sich nicht zum Vor- und Endgären von Backgut und wird üblicherweise einer Vorrichtung zum Vorgaren erst nachgeschaltet. Die Backkästen entsprechen vielmehr den im Oberbegriff genannten Backblechen, die manuell in den Ofen eingeführt und ebenso manuell wieder entnommen werden müssen.

Aus der DE-OS 22 49 381 (entspricht FR-A-2 194 109) ist eine automatische Wärmekammer bekannt, bei der eine Vielzahl von Trägern an einer Eingabestelle mit einer Vielzahl von Teigrollen von Hand belegt wird. Anschließend wird mit den befüllten Trägern ein erster Stapel gebildet. Die nebeneinander angeordneten Stapel werden mittels einer horizontalen Verschiebevorrichtung jeweils um eine Stapelbreite in Richtung einer Ausgabeeinheit hin verschoben; der letzte Stapel wird mittels einer Ausgabevorrichtung schrittweise abgebaut, wobei an einer Ausgabe die endgegarten Teigrollen von Hand abgenommen werden. Vor der Ausgabe werden die Teigrollen von einer in einer Kabine befindlichen Bedienperson eingekerbt. Die entleerten Backbleche können dann über eine Rückführstrecke unter Benutzung von Trocknungs- und Reinigungsvorrichtungen zur Eingabestelle zurückgeführt werden, so daß ein geschlossener Bewegungskreislauf der Backkästen vorliegt.

Zum einen ist mit einer derartigen Vorrichtung ein Vorgären nicht möglich und zum anderen kann zwischen dem Vorgär- und dem Endgärvorgang das Backgut weder gewendet noch geformt werden.

Der vorliegenden Erfindung liegt die Aufgabe zugrunde, eine Vorrichtung zum Vor- und Endgären von Teigportionen zu schaffen, die eine äußerst kompakte Bauweise erlaubt, und deren wesentliche, d.h. mit dem Teig in Berührung kommende Teile sich ohne Unterbrechung des Arbeitsablaufes reinigen lassen.

Diese Aufgabe wird erfindungsgemäß durch die kennzeichnenden Merkmale des Anspruches 1 gelöst.

Die erfindungsgemäße Konstruktion ist im Vorgärbereich durch den Einsatz loser Vorgärkästen gekennzeichnet, die dicht aufeinander und nebeneinander gestapelt sind. Durch die erfindungsgemäße Anordnung der Vorgärkästen und deren Transport im Vorgärbereich wird toter Raum praktisch vollständig vermieden, wobei der Platzbedarf auf ein Minimum reduziert werden kann, nämlich im wesentlichen auf das Volumen der notwendigerweise vorhandenen Vorgärkästen.

Die Vorgärkästen werden schrittweise durch den Vorgärbereich transportiert. Hierzu werden bestimmte Kästen, z.B. der unterste einer Reihe, um einen Schritt angehoben bzw. nach der Seite versetzt. Die Übertragung der Bewegung auf die benachbarten Kästen erfolgt durch Kasten-Kontakt, z.B. über die Stirnflächen derselben.

Zum Formen der Teigportionen besteht bei der erfindungsgemäßen Konstruktion im Gegensatz zur herkömmlichen Bauweise auch die Möglichkeit, den Vorgärkasten samt Teigportionen gegen einen festbestehenden Stempel anzuheben. Im übrigen lassen sich durch die erfindungsgemässe Art der Vorgärkastenbewegung auch die Form- und Wendestation kompakter bauen. Die Vorgärkästen können wahlweise mäanderförmig oder schicht- bzw. zeilenförmig durch den Vorgärbereich transportiert werden. Im Fall der mäanderförmigen - und dem konventionellen Kettenantrieb nachempfundenen - Bewegung der Vorgärkästen sind drei Horizontal- und zwei Vertikalantriebe zur schrittweisen Bewegung der Vorgärkästen vorgesehen.

Die schicht- bzw. zeilenförmige Bewegungsform der Vorgärkästen durch den Vorgärraum hat den Vorteil, daß die Anzahl der die Vorgärkästenstapel nach oben fördernden Vertikalantriebe verringert werden kann, wodurch der Herstellungs- und Wartungsaufwand entsprechend vermindert wird.

Nach dem Formen der Teigportionen werden die Vorgärkästen in einer Wendestation um 180° gedreht bzw. gestürzt. Die geformten Teigportionen bzw. Teiglinge fallen mit der Prägung nach unten auf einen Gärgutträger, auf dem sie einer Endgärung zugeführt werden innerhalb einer Vorrichtung nach den Ansprüchen 12 ff. wobei diese Vorrichtung sowohl unabhängig von dem erfindungsgemäßen Vorgärbereich als auch in Kombination mit diesem als erfindungswesentlich beansprucht wird.

Die Führung der Gärgutträger in einem in einen Endgärraum verfahrbaren Gärwagen kann ebenfalls mäanderförmig oder alternativ zeilen- bzw. schichtweise durchgeführt werden. Auch hierbei können bei einer zeilen- bzw. schichtweisen Bewegung die Horizontal- und Vertikalantriebe jeweils in gleicher Zahl verringert werden.

Nach der Gärung werden die Gärgutträger erneut um 180° gedreht unter gleichzeitiger Ablage der Teigportionen auf einem Backblech. Auf diesem erfolgt der Weitertransport zu einem Backofen, in dem dann die Brötchen oder dgl. in herkömmlicherweise gebacken werden.

Die schichtweise Führung der Vorgärträger durch den Vorgärwagen bzw. der Gärgutträger durch den Gärwagen hat zusätzlich den Vorteil, daß diese jeweils eine beliebige - und nicht wie bei der mäanderförmigen Bewegung eine geradlinige - Anzahl von Gärgutträgerspalten umfassen können. Bei einer nur teilweisen Aufführung des Gärwagens mit Gärgut ergibt sich bei einer schichtweisen Beschickung, daß beim Wenden der Gärgutträger die oberen Bleche jeweils vollständig gefüllt sind, während die unteren Bleche leer bleiben. Bei einer mäanderförmigen Beschichtung des Gärwagens können dagegen in diesen eingeführte Bleche nur teilweise gefüllt werden.

Beim Transport der Teigportionen zum Backofen wird vorzugsweise noch eine Spülanlage passiert, in der die Teiglinge mit Wasser besprüht werden. Auch ein manuelles Absprühen ist denkbar, so wie dies bisher üblich ist.

Dem Vorgärbereich ist vorzugsweise noch ein Magazin für die entleerten Vorgärkästen zugeordnet, welches komplett entnommen und gegen ein anderes Magazin mit gereinigten bzw. getrockneten Vorgärkästen ausgetauscht werden kann. Auf diese Weise läßt sich die Reinigung der Vorgärkästen praktisch ohne Unterbrechung des Arbeitsablaufes durchführen. Im Bedarfsfall können auch einzelne, besonders verschmutzte Vorgärkästen zum Reinigen derselben durch bereits gereinigte Vorgärkästen ausgetauscht werden.

Auch im Magazin ist analog zum Bewegungsablauf der Vorgärkästen im Vorgärbereich ein mäanderförmiger oder alternativ schicht- bzw. zeilenförmiger Bewegungsablauf der Vorgärkästen vorgesehen, wobei auch hier beim schicht- bzw. lagenförmigen Bewegungsablauf eine Verringerung der Vertikalantriebe möglich ist.

Der Transport der die vorgegärten Teigportionen aufnehmenden länglichen, insbesondere brettartigen Gärgutträger im Endbereich erfolgt ähnlich wie im Vorgärbereich. Demgemäß sind im Endbereich die Gärgutträger jeweils lose voneinander angeordnet, und zwar dicht aufeinander und nebeneinander gestapelt.

Nachstehend wird eine Ausführungsform der erfindungsgemäßen Vorrichtung beispielsweise anhand der beigefügten Zeichnungen näher erläutert. Es zeigen:
- Fig. 1:: einen erfindungsgemäß ausgebilden Vorgärbereich samt Magazin für die entleerten Vorgärkästen in schematischer Seitenansicht;
- Fig. 2:: einen Vorgärkasten im Längsschnitt;
- Fig. 2a:: den Vorgärkasten gemäß Fig. 2 im Querschnitt;
- Fig. 2b:: den Vorgärkasten gem. Fig. 2 in Stirnansicht;
- Fig. 3:: den in Fig. 1 dargestellten Vorgärbereich ergänzt durch einen Wagen zur Aufnahme von Gärgutträgern, ebenfalls in schematischer Seitenansicht;
- Fig. 4a bis 4c:: den Bewegungsablauf der Gärgutträger innerhalb des in

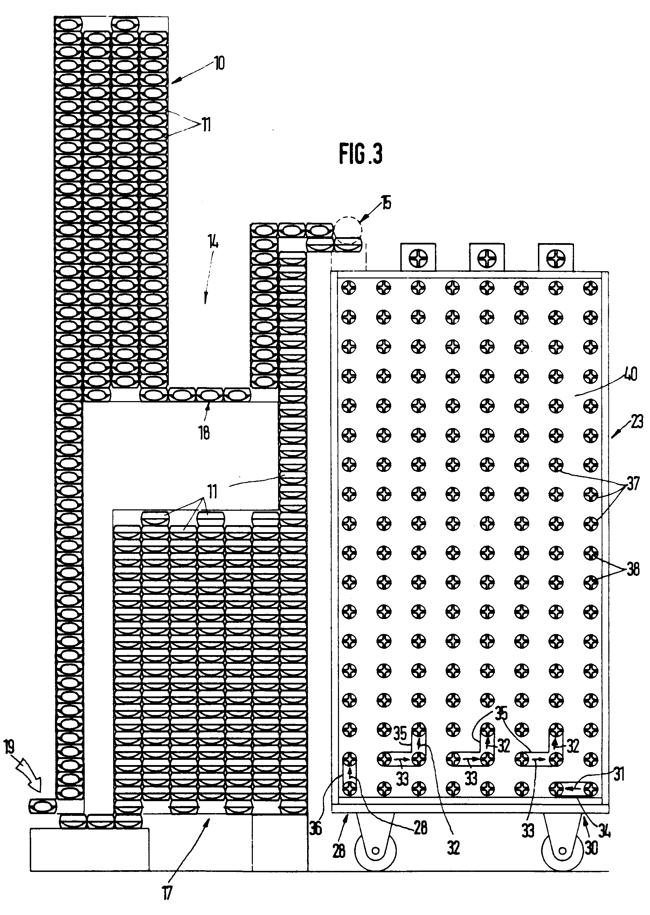

- Fig. 3: schematisch dargestellten Wagens zur Aufnahme der Gärgutträger (Gärwagen);

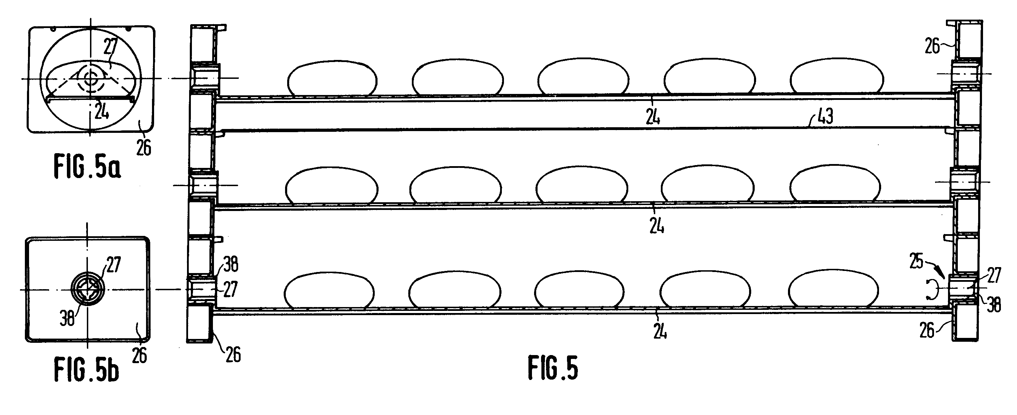

- Fig. 5:: drei übereinandergestapelte Gärgutträger im Längsschnitt und vergrößertem Maßstab;
- Fig. 5a:: einen Gärgutträger gem. Fig. 5 im Querschnitt unter Darstellung seiner gondelartigen Lagerung;
- Fig. 5b:: einen Gärgutträger gem. Fig. 5 in Stirnansicht;

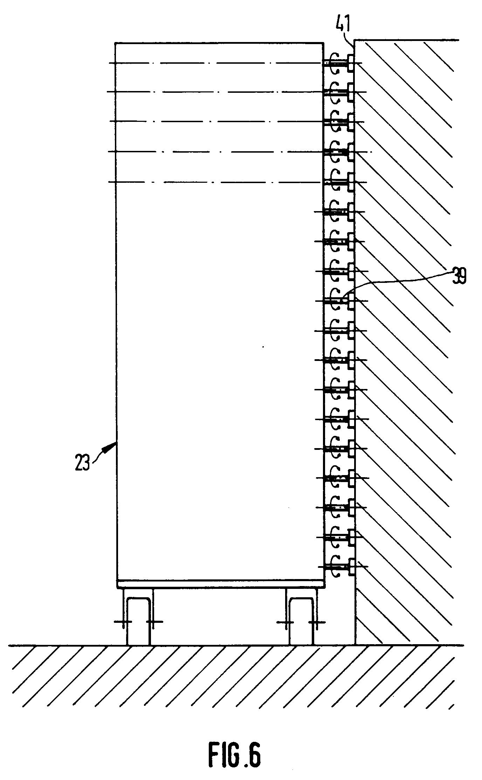

- Fig. 6:: die Zuordnung des Wagens zur Aufnahme der Gärgutträger zu einer Gärgutträger-Wendeeinrichtung in schematischer Ansicht;

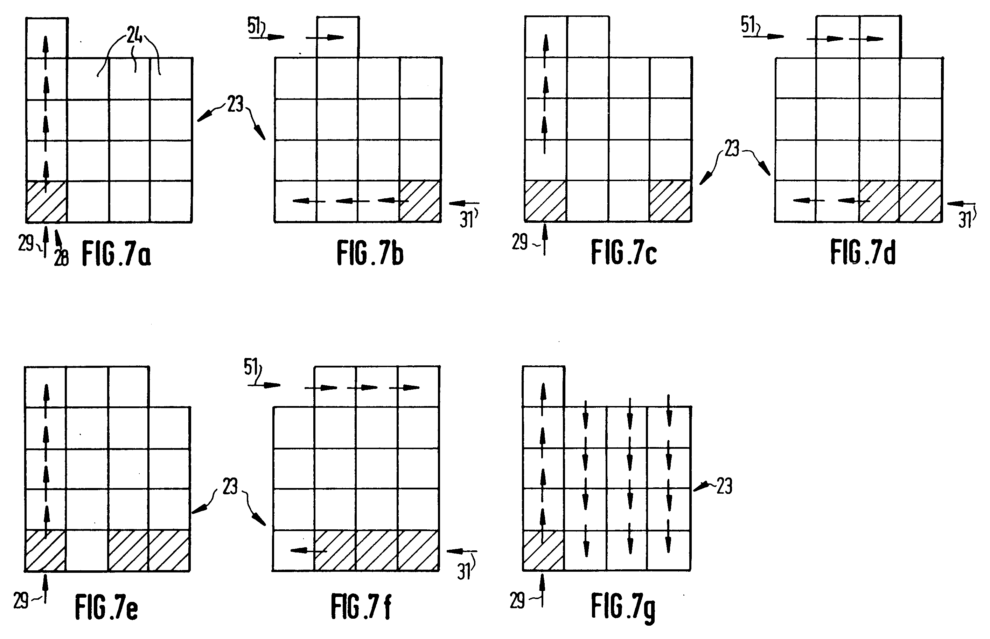

- Fig. 7a bis 7g:: einen weiteren alternativen Bewegungsablauf der Gärgutträger innerhalb des in Fig. 3 schematisch dargestellten Wagens zur Aufnahme der Gärgutträger;

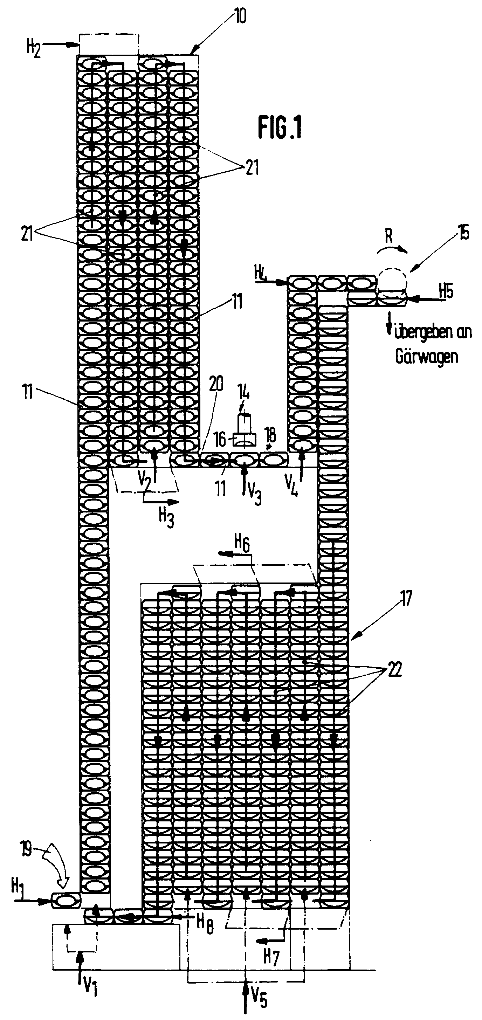

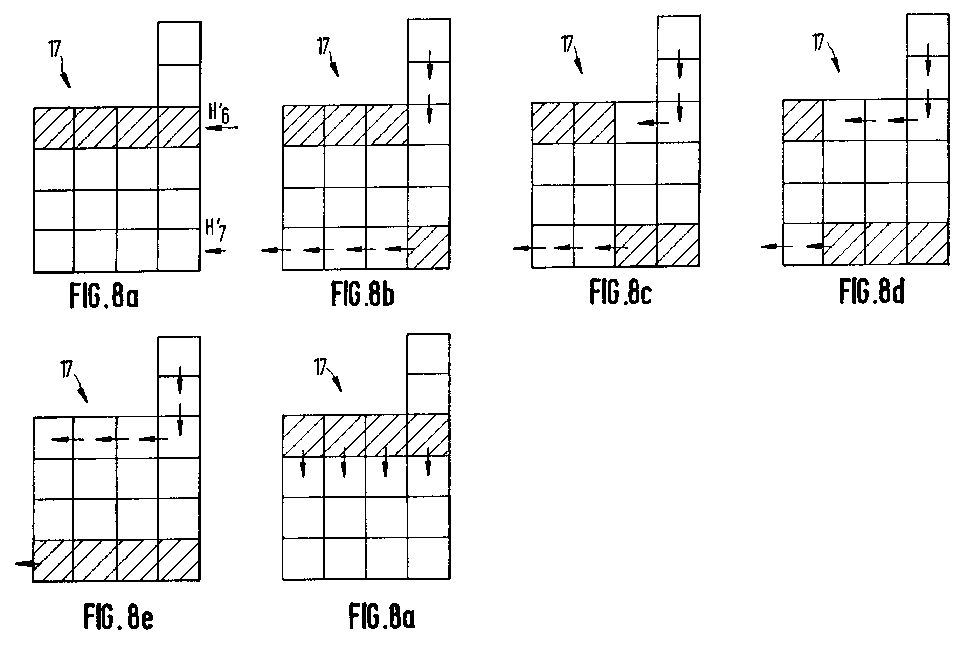

- Fig. 8a bis 8e:: einen zeilenartigen Bewegungsablauf der Vorgärkästen innerhalb des in den Figuren 1 und 3 dargestellten Magazins, und
- Fig. 9a bis 9d:: einen zeilenartigen Bewegungsablauf der Vorgärkästen innerhalb des in den Figuren 1 und 3 dargestellten Vorgärbereichs, insbesondere Vorgärschranks.

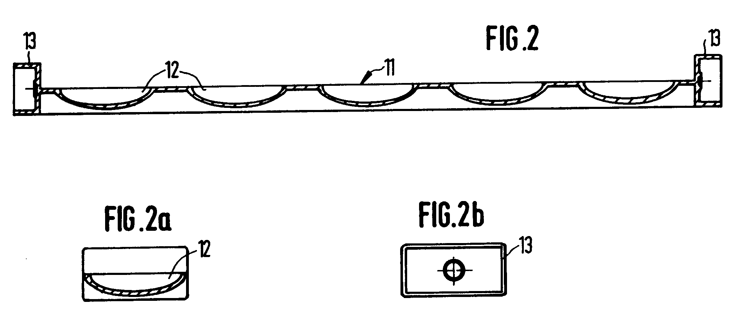

In Fig. 1 ist der erfindungsgemäß ausgebildete Vorgärbereich in schematischer Seitenansicht dargestellt. Dementsprechend ist dieser Bereich, der durch die Bezugsziffer 10 gekennzeichnet ist, durch eine Vielzahl von lose übereinander und nebeneinander gestapelten Vorgärkästen 11 gekennzeichnet, die jeweils mehrere, z.B. fünf muldenartige Vertiefungen 12 (siehe Figuren 2 und 2a) zur Aufnahme je einer Teigportion bzw. eines Teiglings umfassen. Gemäß den Figuren 2, 2a und 2b sind die Vorgärkästen 11 jeweils einstükkig, z.B. aus Kunststoff, hergestellt. Der stirnseitige Anschluß ist jeweils definiert durch einen Rechteckrahmen 13, über den die gegenseitige Abstützung der übereinander und nebeneinander gestapelten Vorgärkästen 11 innerhalb des Vorgärbereichs 10 erfolgt, wobei die Ecken der Rechteckrahmen 13 vorzugsweise jeweils abgerundet sind.

Unmittelbar hinter dem Vorgärbereich 10 ist eine Formstation 14 angeordnet, an die sich eine Wendestation 15 anschließt. Die Formstation 14 umfaßt einen Stempel 16 zur Einprägung eines Musters auf der Oberseite der sich noch in den muldenartigen Vertiefungen 12 der Vorgärkästen 11 befindlichen Teigportionen, wobei es sich um einen auf- und abbewegbaren Stempel 16 oder alternativ einen feststehenden Stempel handeln kann. Im letztgenannten Fall muß dann der Vorgärkasten 11 samt Teigportionen zum Stempel 16 hin angehoben werden, um die vorgenannte Einprägung eines Musters auf die Oberseite der Teigportionen zu erreichen. Diese Ausführungsform ist in Fig. 1 schematisch dargestellt. Die Anhebung des dem Stempel 16 zugeordneten Vorgärkastens 11 erfolgt durch eine Hubeinrichtung V₃.

In der der Formstation 14 folgenden Wendestation 15 werden die Vorgärkästen um jeweils 180° gewendet unter gleichzeitigem Abwurf der vorgegärten Teigportionen auf in Fig. 1 nicht mehr dargestellte Gärgutträger. Die entleerten Vorgärkästen werden weiter zu einem Magazin 17 transportiert, aus dem dann die Vorgärkästen 11 erneut zur Befüllung mit Teigportionen und Vorgärung verwendet werden.

Die Vorgärkästen 11 sind also im Bereich 10, welcher insbesondere durch einen Vorgärschrank begrenzt ist, lose übereinander und nebeneinander gestapelt und in der Ausführungsform nach Fig. 1 mäanderförmig durch den vorgenannten Bereich hindurch bewegbar. Zu diesem Zweck sind die Vorgärkästen wenigstens einmal, beim dargestellten Ausführungsbeispiel zweimal, vertikal auf- und abbewegbar, sowie in der jeweils tiefsten und höchsten Position horizontal bewegbar. Das Anheben der Kastenstapel erfolgt durch Hubeinrichtungen V₁ und V₂. Die Horizontalverschiebung je eines Vorgärkastens um eine Vorgärkastenbreite erfolgt in der jeweils tiefsten Position durch Horizontalantriebe H₁ bzw. H₃. In der höchsten Position erfolgt die Horizontalverschiebung der Vorgärkästen durch einen Horizontalantrieb H₂.

Bei einer Ausführungsform, bei der die Vorgärkästen 11 mit Ausnahme des ersten Vorgärkastenstapels in noch zu beschreibender Weise zeilen- bzw. schichtweise durch den vorgenannten Vorgärraum 10 nach unten bewegt werden, kann auf die Hubeinrichtung V₂ verzichtet werden, so daß das Anheben des ersten Kastenstapels durch die Hubeinrichtung V₁ erfolgt und die Horizontalverschiebungen der Vorgärkästen durch die Horizontalantriebe H₁ bzw. H₃ und H₂.

Der der Formstation 14 zugeordnete Stempel 16 ist im Bereich einer sich an einen Auslaß 20 des Vorgärschranks 10 anschließenden horizontalen Transportstrecke 18 der Vorgärkästen 11 wirksam, wobei die Horizontalbewegung in diesem Bereich durch den vorgenannten Horizontalantrieb H₃ erfolgt. Nach der Prägung der Teigportionen werden die Vorgärkästen mittels einer Hubeinrichtung bzw. eines Vertikalantriebs V₄ in den Bereich der höher gelegenen Wendestation 15 angehoben. Die Bewegung in die Wendestation 15 hinein erfolgt durch einen entsprechend zugeordneten Horizontalantrieb H₄. Die durch das Wenden um 180° entleerten Vorgärkästen werden dann mittels eines gesonderten Horizontalantriebs H₅ aus dem Bereich der Wendestation 15 unter gleichzeitigem Transport zu dem vorerwähnten Magazin 17 herausbewegt, in welchem die entleerten Vorgärkästen ebenfalls lose übereinander und nebeneinander gestapelt werden.

Der Bewegungsverlauf der Vorgärkästen im Magazin 17 kann ebenfalls mäanderförmig sein, wobei mittels sukzessiver Betätigung eines an unterster Stelle wirksamen Horizontalantriebs H₇, Vertikalantriebs V₅ sowie im oberen Bereich wirksamen Horizonalantriebs H₆ die Vorgärkästen 11 schrittweise weitertransportiert werden. In einem alternativen Bewegungsablauf können die Vorgärkästen 11 im Magazin 17 ebenfalls schicht- bzw. zeilenweise durch das Magazin bewegt werden. Dabei sind nur die Horizontalantriebe H₇ und H₈ erforderlich, so daß bei einer derartigen Bewegungsform auf die Vertikalantriebe V₅ verzichtet werden kann.

Durch einen am Ausgang des Magazins 17 wirksamen Horizontalantriebs H₈ erfolgt der kastenweise Transport zurück in den Bereich der Vorgärung, und zwar zunächst in den Bereich einer Teigbeschickungseinrichtung 19, in welchem zur Beschickung der jeweils leeren Vorgärkasten mittels der auch in diesem Bereich wirksamen Hubeinrichtung V₁ unter eine Teigbeschickungsöffnung angehoben wird. Anschließend wird der mit Teig beschickte Vorgärkasten mittels des Horizontalantriebs H₁ in die Hubstrecke des ersten Vorgärkastenstapels des Vorgärbereichs 10 gebracht, um dort schrittweise angehoben zu werden. Sobald der entsprechende Vorgärkasten die oberste Position in der ersten Hubstrecke erreicht hat, wird der im oberen Bereich angeordnete Horizontalantrieb H₂ wirksam, wobei der entsprechende Vorgärkasten gemäß Fig. 1 horizontal nach rechts verschoben wird.

Bei einer mäanderförmigen Bewegungsform gelangen die mittels des Horizontalantriebs H₂ geförderten Vorgärkasten in den Bereich der benachbarten Vorgärkasten-Absenkstrecke. Nachdem dieser Vorgärkasten in der Absenkstrecke die tiefste Position erreicht hat, wird der dort angeordnete Horizontalantrieb H₃ wirksam. Mittels dieses Antriebs erfolgt die seitliche Versetzung des Vorgärkastens in die nächste Hubstrecke usw., bis der Vorgärkasten den Auslaß 20 des Vorgärbereichs, z.B. Vorgärschrank 10, erreicht hat.

Bei einer zeilen- bzw. schichtartigen Bewegungsform der Vorgärkästen 11 durch den Vorgärbereich 10 bewegt der vorgenannte Horizontalantrieb H₂ die Vorgärkästen 11 des ersten Vorgärkastenstapels zeilenweise so weit nach rechts, bis die oberste Zeile des Vorgärbereichs vollständig gefüllt ist, während gleichzeitig der Horizontalantrieb H₃ die untersten Vorgärkästen 11 aller Vorgärkästenstapel mit Ausnahme des ersten Vorgärkästenstapels schrittweise aus dem Vorgärkastenbereich 10 derart bewegt, daß bei einer voll mit Vorgärkästen gefüllten Vorgärkastenreihe die untersten Vorgärkastenplätze der Vorgärkastenstapel mit Ausnahme des ersten Vorgärkastens frei sind. Anschließend rutschen bzw. fallen alle Vorgärkästen der Vorgärkastenstapel mit Ausnahme des ersten Vorgärkastens um eine Vorgärkastenhöhe nach unten, so daß die obersten Vorgärkastenplätze wieder frei und die untersten Vorgärkastenplätze der Vorgärkastenstapel wieder besetzt sind.

Die Absenkung der Vorgärkästen sowohl im Vorgärbereich 10 als auch im Magazin 17 erfolgt jeweils durch das Eigengewicht. Um eine Beschädigung der Vorgärkästen zu vermeiden, können im untersten Bereich der Absenkstrecken Stoßdämpfer oder dgl. vorgesehen sein.

Die Transportstrecke bei der mäanderförmigen Bewegung der Vorgärkästen im Vorgärbereich 10 sowie im Magazin 17 ist in Fig. 1 durch die Pfeile 21 und 22 dargestellt. Es versteht sich von selbst, daß vorzugsweise sämtliche Horizontal- und Vertikalbewegungen, die durch die entsprechenden Antriebselemente H₁, ... und V₁, ... jeweils miteinander gekoppelt sind, jeweils gemeinsam erfolgen. Damit kann die Anzahl der Antriebseinheiten minimiert werden.

Zusätzlich minimiert werden können die Antriebseinheiten bei einer zeilen- bzw. schichtweisen Bewegungsform der Vorgärkästen im Vorgärbereich 10 sowie im Magazin 17. Wie nachfolgend noch erläutert, werden dabei im Vorgärbereich mit Ausnahme der Förderung des ersten Vorgärkastenstapels lediglich Horizontalantriebe H₂ und H₃ benötigt, wobei auf weitere Vertikalantriebe - wie beispielsweise V₂ - verzichtet werden kann. Analog können die Vertikalantriebe V₅ im Magazin 17 bei einer zeilenweisen Bewegungsform der Vorgärkästen 11 eingspart werden. Mit dieser Einsparung der jeweiligen Antriebe können sowohl die Herstellungskosten wie auch die Wartungskosten vermindert werden, und ebenfalls die Gefahr eines schadhaften Antriebs wird verringert.

Fig. 1 läßt sehr deutlich erkennen, daß sowohl der Vorgärbereich 10 als auch das Magazin 17, welches als Ganzes zum Zwecke der Reinigung und Trocknung der Vorgärkästen ausgetauscht werden kann, aufgrund der erfindungsgemäßen losen Stapelung der Vorgärkästen übereinander und nebeneinander extrem kompakt gebaut werden können, wobei insbesondere Totbereiche vermieden werden können.

Anhand der Fig. 3 soll nun die Anordnung für die Gärgutträger, auf denen die vorgegärten Teigportionen abgelegt werden, näher beschrieben werden.

Dementsprechend ist eine Vielzahl von jeweils brettartig ausgebildeten und um ihre Längsachse drehbar gelagerten Gärgutträgern in ähnlicher Weise wie die Vorgärkästen im Vorgärbereich 10 bzw. Magazin 17 innerhalb eines sog. Gärwagens lose übereinander und nebeneinander gestapelt mit der Folge, daß sie ähnlich wie die Vorgärkästen im Vorgärbereich 10 bzw. Magazin 17 vorzugsweise mäanderförmig oder zeilen- bzw. lagenförmig durch den vorgenannten Gärwagen, der mit der Bezugsziffer 23 gekennzeichnet ist, hindurch bewegt werden.

Entsprechend den Figuren 5, 5a und 5b sind die brettartigen Gärgutträger 24 an ihren Stirnseiten jeweils gondelartig gelagert (siehe Fig. 5a), wobei die Drehlagerung 25 jeweils innerhalb rechteckförmiger Scheiben 26 ausgebildet ist. Diese Scheiben 26, die nach Art eines Rechteckrahmens ausgebildet sind, dienen zugleich als gärgutträgerseitige Führungselemente für die Bewegung der Gärgutträger durch den Gärwagen 23 innerhalb der Endgärstation hindurch. Die gegenseitige Abstützung der Gärgutträger erfolgt also durch die stirnseitig angeordneten Lagerscheiben 26, und zwar sowohl zur Seite als auch nach oben und unten hin. Die Kanten der Lagerscheiben 26 sind entsprechend den Figuren 5a, 5b abgerundet, um eine Verklemmung der Gärgutträger bei der Horizontal- und Vertikalbewegung innerhalb des Gärwagens 23 zu vermeiden.

Die Scheibenlager 26 sind vorzugsweise aus Kunststoff hergestellt. Das gleiche gilt für die brettartigen Gärgutträger 24. Zum Zwecke der gondelartigen Lagerung der Gärgutträger 24 erstrecken sich diese jeweils unterhalb der durch die zugeordneten Drehlager 25 definierten Drehachse 27 (siehe Figuren 5 und 5a).

Den Gärgutträgern 24 sind stirnseitig angreifende Antriebseinrichtungen, die hier nicht näher dargestellt sind, zum Anheben und/oder seitlichen Versetzen von über- und nebeneinander angeordneten Gärgutträgern 24 zugeordnet. Entsprechend Fig. 3 ist dem der Wendeeinrichtung 15 unmittelbar nachgeordneten bzw. ersten Stapel 28 von Gärgutträgern eine am untersten Gärgutträger dieses Stapels angreifende Einrichtung 29 zum Anheben des Gärgutträgerstapels um jeweils eine Trägerhöhe zugeordnet, während dem bezüglich der Wendeeinrichtung 15 letzten Stapel 30 von Gärgutträgern eine am untersten Gärgutträger dieses Stapels angreifende Einrichtung 31 zur Seite hin bzw. horizontalen Versetzung dieses Gärgutträgers um eine Trägerbreite in Richtung zum ersten Gärgtträgerstapel 28 hin zugeordnet ist.

Zwischen dem ersten und letzten Stapel von Gärgutträgern sind bei dem in Fig. 3 dargestellten Ausführungsbeispiel sechs weitere Gärgutträgerstapel angeordnet, wobei bei diesen Gärgutträgerstapeln am jeweils zweituntersten Gärgutträger angreifende Einrichtungen 32 zum Anheben eines jeden zweiten Gärgutträgerstapels sowie Einrichtungen 33 zum seitlichen Versetzen des diesen Stapel jeweils benachbarten zweituntersten Gärgutträgers in den durch die Anhebung des vorgenannten Gärgutträgerstapels freigewordenen Raum hinein vorgesehen sind. Des weiteren ist dem dem ersten Gärgutträgerstapel 28 benachbarten Gärgutträgerstapel bei dieser Ausführungsform eine Einrichtung 33 zur horizontalen Versetzung des zweituntersten Gärgutträgers zugeordnet, während dem dem letzten Gärgutträgerstapel 30 benachbarten Gärgutträgerstapel eine Einrichtung 32 zum Anheben dieses Stapels zugeordnet ist. Die vorgenannten Vertikal- und Horizontalantriebe 29, 30, 31, 32 und 33 werden durch von außen her an den Stirnseiten bzw. den Lagerscheiben 26 der Gärgutträger angreifende Antriebszapfen (nicht dargestellt) gebildet, die in der beschriebenen Weise vertikal und/oder horizontal bewegt werden. Die den Lagerscheiben 26 zugeordneten Begrenzungswände des Gärwagens 23 sind zur Durchführung der vorgenannten Verschiebebewegung mittels der Horizontal- und Vertikalantriebe 29, 31, 32 und 33 entsprechend ausgespart. Diese Aussparungen sind in Fig. 3 mit den Bezugsziffern 34, 35 und 36 gekennzeichnet. Dabei sind die Aussparungen im Bereich zwischen dem ersten und letzten Gärgutträgerstapel jeweils L-förmig. Die Gärgutträger dieses Ausführungsbeispiels werden mäanderförmig durch den Gärwagen bewegt.

Analog zu den Bewegungsformen der Vorgärkästen im Magazin 17 bzw. im Vorgärbereich 10 können die Gärgutträger auch schicht- bzw. zeilenförmig durch den Gärwagen bewegt werden. Dabei ist es insbesondere nicht notwendig, daß eine gerade Anzahl von Gärgutträgerstapeln im Gärwagen vorhanden sind. Bei einer dementsprechenden Ausführungsform kann gegenüber der Ausführungsform mit dem mäanderförmigen Bewegungsablauf sowohl auf die Vertikalantriebe 33 wie auch die Horizontalantriebe 32 verzichtet werden. Des weiteren sind auch die mit 34, 35 und 36 bezeichneten Aussparungen in den den Lagerscheiben 26 zugeordneten Begrenzungswänden des Gärwagens 23 zur Durchführung der Verschiebebewegungen nicht notwendig. Demgemäß kann eine große Anzahl von Antrieben eingespart werden.

Im übrigen sind die in den vorgenannten Begrenzungswänden des Gärgutwagens 23 kreisrunden Öffnungen 37 jeweils im Bereich der Drehlager 25 der Gärgutträger ausgebildet. Entsprechend den Figuren 5 und 5b weisen die Gärgutträger 24 stirnseitig Lagerzapfen 38 auf, die in den zugeordneten Lagerscheiben 26 so gelagert sind, daß ihre stirnseitigen Enden für - im vorliegenden Fall - formschlüssig angreifende Wendeelemente 39 (siehe Figur 6) zugänglich sind, und zwar durch die vorgenannten Öffnungen 37 in den seitlichen Begrenzungswänden des Gärwagens 23 hindurch. Die in Fig. 3 dargestellte seitliche Begrenzungswand mit der Öffnung 37 bzw. den zusätzlichen Öffnungen 34, 35 und 36 ist mit der Bezugsziffer 40 gekennzeichnet. Der Gärwagen 23 wird nach Füllung mit vorgegärten Teigportionen in einen Gärraum gefahren, in dem er dann zur Endgärung der Teigportionen etwa 20 Minuten bleibt. Anschließend erfolgt die Übergabe der Teigportionen auf Backbleche. Zu diesem Zweck werden im Gärvagen 23 jeweils zwischen zwei übereinander angeordneten Gärgutträgern 24 Backbleche 43 eingeschoben (siehe Fig. 5). Danach wird der Gärwagen 23 entsprechend Fig. 6 zu einer Einrichtung mit einer Vielzahl von Gärgutträger-Wändeelementen 39 verfahren, die durch die vorgenannten Öffnungen 37 in der seitlichen Begrenzungswand 40 hindurch wirksam sind, d.h. formschlüssig an den stirnseitigen Enden der Lagerzapfen 38 der Gärgutträger 24 angreifen. Mittels der Wändeelemente 39 werden die Gärgutträger 24 um 180° gedreht unter gleichzeitigem Abwurf der gegarten Teigportionen auf jeweils unter den Gärgutträgern 24 eingeschobene Backbleche 43. Die Backbleche 43 werden dann samt gegarter Teigportionen aus dem Gärgutwagen herausgezogen und mittels eines gesonderten Backwagens in den Backofen verfahren. Beim Transport der Teigportionen vom Gärwagen 23 zum Backofen können die Teigportionen entweder manuell in herkömmlicher Weise geduscht werden, oder es ist auch denkbar, die Teigportionen an einer ortsfesten Sprüh- bzw. Duschanlage vorbeizufahren, in der dann die Teigportionen geduscht bzw. abgesprüht werden. Dem Duschwasser können Zusätze wie Stärke oder dgl. zugesetzt sein. Gleiches gilt nach dem Backen. Das Duschen der Teigportionen erfolgt vorzugsweise auf den Backblechen.

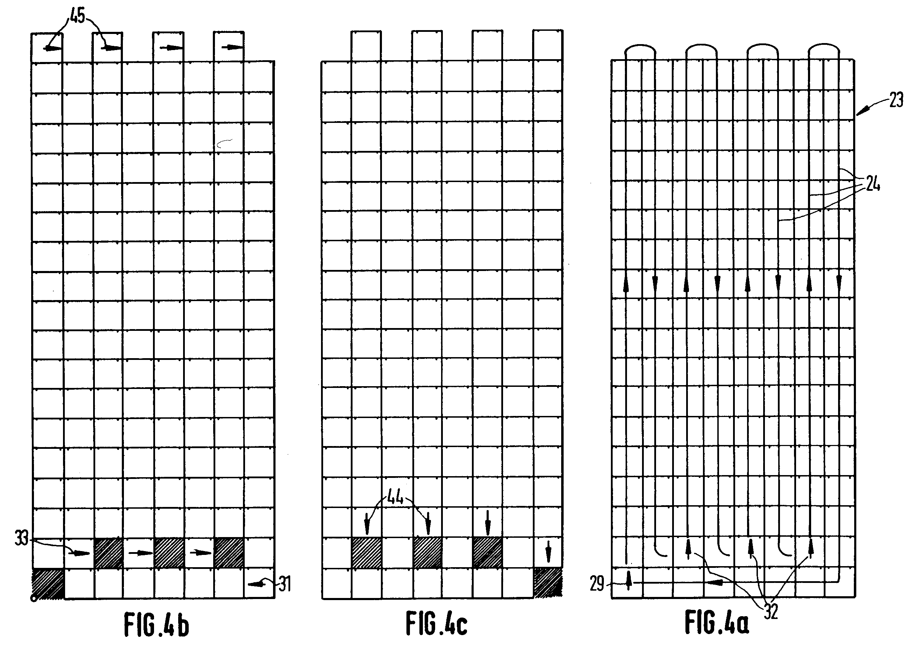

Die Figuren 4a bis 4c, 7a bis 7g, 8a bis 8e und 9a bis 9d zeigen Bewegungsabläufe der Vorgärkästen 11 und der Gärgutträger 24 durch den Gärwagen 23, das Magazin 17 sowie den Vorgärbereich 10.

Beim mäanderförmigen Bewegungsablauf der Gärgutträger 24 gemäß den Figuren 4 werden mittels eines Vertikalantriebs 29 bzw. 32 der erste, dritte, vierte und fünfte Gärgutträgerstapel angehoben, und zwar um die Höhe eines Gärgutträgers, wobei der Angriff des Vertikalantriebs 29 am untersten Gärgutträger des ersten Stapels erfolgt. Im übrigen greift der Vertikalantrieb 32 jeweils am zweituntersten Gärgutträger an. Die dabei entstehenden Freiräume innerhalb des Gärwagens 23 sind in Fig. 4b schraffiert dargestellt. In dieser Stellung werden die jeweils obersten, aus dem Gärvagen 23 vorstehenden Gärgutträger mittels eines oberen Horizontalantriebs 45 jeweils nach rechts in den Bereich des nächstfolgenden Gärgutträgers verschoben. Das gleiche gilt für die zweituntersten Gärgutträger des zweiten, vierten und sechsten Gärgutträgerstapels. Diese Gärgutträger werden in die vorgenannten Freiräume eingeschoben. Der entsprechende Horizontalantrieb ist in Fig. 4b mit der Bezugsziffer 33 gekennzeichnet. Mittels eines weiteren Horizontalantriebs 31 wird der Freiraum unterhalb des ersten Gärgutträgerstapels mit einem Gärgutträger ausgefüllt. Damit ergibt sich eine Situation, wie sie in Fig. 4c dargestellt ist. Die durch die vorgenannten Gärgutträger-Verschiebungen im unteren Bereich entstehenden Freiräume sind dort ebenfalls wieder schraffiert dargestellt. In diese Freiräume fällt der sich jeweils darüber befindliche Gärgutträgerstapel entsprechend dem Pfeil 44 in Fig. 4c.

Der vorbeschriebene und in den Figuren 4a bis 4c dargestellte Bewegungsablauf wird so lange fortgesetzt, bis der gesamte Gärwagen 23 mit Teigportionen gefüllt ist, um dann in einen Endgärraum verbracht zu werden.

Gemäß den Figuren 7a bis 7g wird ein zeilen- bzw. schichtartiger Bewegungsablauf der Gärgutträger innerhalb des Gärwagens 23 schematisch dargestellt. In Fig. 7a ist mit der Bezugszahl 29 ebenfalls der den ersten Gärgutträgerstapel um eine Gärgutträgerhöhe nach oben bewegender Vertikalantrieb bezeichnet. Die schraffierten Kästchen geben leere Gärgutträgerpositionen an und die Pfeile bezeichnen die Richtungen, in die Gärgutträger 24 verschoben worden sind. In Fig. 7a ist eine Situation gegeben, in der die Gärgutträger 24 des ersten Gärgutträgerstapels mittels des Vertikalantriebs 29 um eine Gärgutträgerhöhe nach oben verschoben worden sind, wobei die unterste Gärgutträgerposition des ersten Gärgutträgerstapels freigeworden ist. In Fig. 7b werden alle untersten Gärgutträger und der oberste Gärgutträger durch die Horizontalantriebe 31 bzw. 51 entgegengesetzt zueinander bewegt, so daß die letzte Position in der untersten Zeile der Gärgutträgerstapel frei und die erste Position besetzt wird. Gegenläufig wird der sich in oberster Position befindliche Gärgutträger um eine Position in Richtung des letzten Gärgutträgerstapels verschoben. Gemäß Fig. 7c wurde der erste Gärgutträgerstapel wieder um eine Position nach oben verschoben, und in Fig. 7d werden nachfolgend wiederum die untersten Gärgutträger in Richtung des ersten Gärgutträgerstapels und die obersten Gärgutträger in Richtung des letzten Gärgutträgerstapels verschoben. Wiederum werden nun gemaß Fig. 7e die Gärgutträger 24 des ersten Gärgutträgerstapels angehoben, so daß nunmehr die ersten drei Positionen der ersten Zeile mit Gärgutträgern besetzt sind und in der untersten Zeile nur noch ein Gärgutträger in der zweiten Gärgutträgerspalte vorhanden ist, der im nachfolgenden Schritt um eine Position in Richtung des ersten Gärgutträgerstapels mittels des Horizontalantriebs 31 verschoben wird, während die obersten Gärgutträger jeweils um eine Position nach rechts verschoben werden. Im letzten Schritt schließlich fallen alle Gärgutträger aller Gärgutträgerstapel mit Ausnahme des ersten Gärgutträgerstapels um eine Position nach unten; und die Gärgutträger 24 des ersten Gärgutträgerstapels werden mittels des Vertikalantriebs um eine Position nach oben versetzt, so daß die Ausgangssituation der Fig. 7a wieder vorliegt.

Auch dieser Bewegungsablauf wird so lange fortgesetzt, bis der gesamte Gärwagen 23 mit Teigportionen gefüllt ist. Vorteilhaft gegenüber der mäanderförmigen Beschickung des Gärwagens ist hierbei, daß eine beliebige - und nicht eine ganzzahlige - Spaltenzahl im Gärwagen vorhanden sein kann. Des weiteren wird sichergestellt, daß bei einer nur teilweisen Beschickung der Gärwagen mit Gärgut lediglich die oberen Ebenen der Gärgutträgerstapel gefüllt sind, so daß bei Wenden der Gärgutträger um 180° die oberen Bleche vollständig beschickt werden und die unteren Bleche leer bleiben. Demgegenüber tritt bei einem mäanderförmigen Bewegungsablauf und bei teilweiser Beschickung des Gärwagens das Problem auf, daß alle Bleche nur teilweise beschickt werden. In einem solchen Fall müssen die Backbleche 43 von Hand aufgefüllt werden, da ansonsten der Backofen nicht ausgelastet betrieben werden kann. Insbesondere bei einer großen Gärgutträgerstapelanzahl gewinnt diese Problematik an Bedeutung.

In den Figuren 8a bis 8e ist ein zeilen- bzw. schichtweiser Bewegungsablauf der Vorgärkästen 11 im Magazin 17 schematisch dargestellt. In Fig. 8a ist ein in der untersten Vorgärkastenzeile angeordneter Horizontalantrieb H'₇ sowie ein in der obersten Reihe angreifender Horizontalantrieb H'₆ dargestellt, wobei beide Antriebe die in den jeweiligen Zeilen befindlichen Vorgärkästen 11 jeweils um eine Position in Richtung des letzten Vorgärkastenstapels bewegen. In Fig. 8a ist die oberste Zeile der Gärgutträgerstapel, gekennzeichnet mittels Schraffur, frei, während die letzte Zeile mit Vorgärkästen gefüllt ist. Im Verlauf der Figuren 8a bis 8e wird nun die oberste Zeile mit Vorgärkästen gefüllt, wogegen die unterste Zeile gleichzeitig schrittweise entleert wird. In Fig. 8e ist ein Zustand gezeigt, in dem die oberste Zeile der Vorgärkastenstapel des Magazins 17 voll gefüllt ist, wogegen die unterste Zeile vollständig entleert ist. Im nächsten Schritt fallen alle Vorgärkästen 11 aller Vorgärkastenstapel um eine Positon nach unten, so daß der Zustand der Fig. 8a wieder erreicht ist. Durch einen wiederholten Ablauf dieser Bewegung werden die Vorgärkästen 11 durch das Magazin 17 bewegt. Vorteilhaft dabei ist, daß nur zwei Horizontalantriebe H'₆ sowie H'₇ zur Bewegung der Vorgärkästen erforderlich sind.

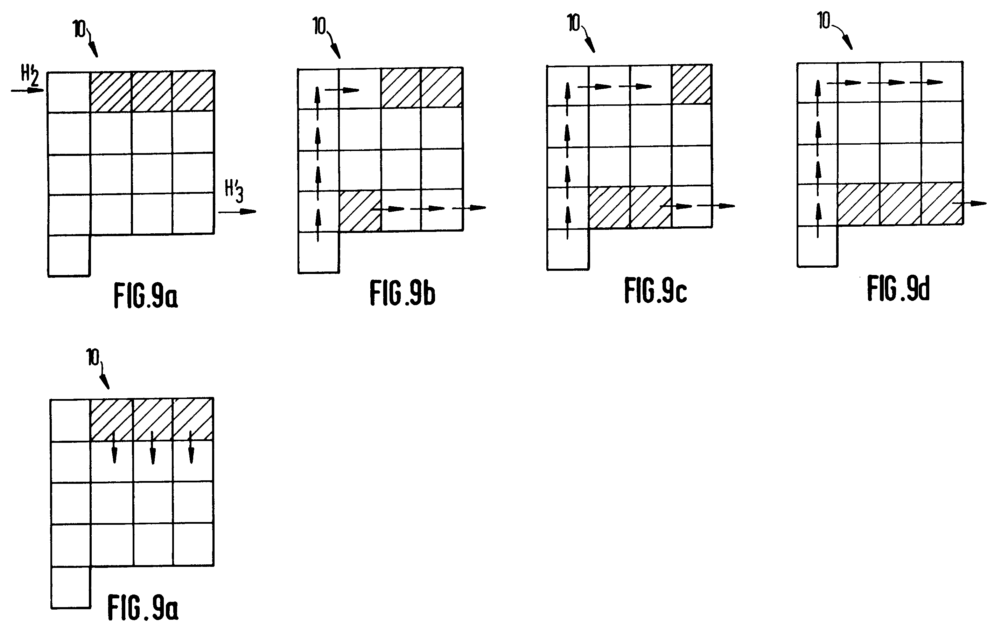

Schließlich ist in den Figuren 9a bis 9d ein schematischer, zeilen- bzw. schichtförmiger Bewegungsablauf der Vorgärkästen 11 im Vorgärbereich 10 dargestellt. Auch hier sind die leeren Vorgärkästenpositionen mittels Schraffur dargestellt und die Verschiebungen der Vorgärkästen sind mit Pfeilen angezeigt. Zur Bewegung der Vorgärkästen im Vorgärraum sind lediglich die in Fig. 9a angegebenen Horizontalantriebe H'₂ sowie H'₃ erforderlich, welche in der obersten bzw. untersten Zeile der Gärgutträgerstapel wirken. Nicht dargestellt ist in den Figuren 9 der die Vorgärkästen nach oben fördernde Vertikalantrieb V₁. In der Ausgangsposition der Fig. 9a sind die obersten Positionen aller Vorgärkästenstapel mit Ausnahme des ersten Vorgärkastenstapels frei. Sodann wird der oberste Vorgärkasten 11 des ersten Vorgärkastenstapels um eine Position in Richtung des letzten Vorgärkastenstapels des Vorgärraums 10 bewegt, während die untersten Vorgärkästen der untersten Vorgärkastenzeile des Vorgärraums 10 in Richtung aus dem Vorgärraum 10 verschoben werden. Dieser Ablauf wird so lange durchgeführt, bis die oberste Vorgärkastenzeile vollständig gefüllt, die unterste Vorgärkastenzeile mit Ausnahme des ersten Vorgärkastenstapels geleert ist (Figuren 9b bis 9d). Im nächsten Schritt fallen nun alle Vorgärkästen 11 aller Vorgärkastenstapel mit Ausnahme des ersten Vorgärkastenstapels um eine Vorgärkastenhöhe nach unten, so daß die oberste Zeile mit Ausnahme des ersten Vorgärkastenstapels leer ist, wogegen die unterste Vorgärkastenzeile wieder mit Vorgärkästen gefüllt ist. Auch hierbei gilt, daß durch eine Wiederholung dieser Bewegung alle Vorgärkästen 11 durch den Vorgärbereich 10 bewegt werden können.

## Patentansprüche

1. Vorrichtung zum Garen von Teigportionen mit einer
- Vorgärstation,
- Form- (14) und Wendestation (15) und
- Endgäreinrichtung (23),
wobei die Vorgärstation eine Vielzahl länglicher Vorgärkästen (11) mit muldenartigen Vertiefungen (12) zur Aufnahme je einer Teigportion sowie einen Antrieb für die Bewegung der Vorgärkästen (11) mit muldenartigen Vertiefungen (12) zur Aufnahme je einer Teigportion durch einen Vorgärraum, insbesondere Vorgärschrank (10), hindurch umfaßt, derart, daß jeder Vorgärkasten (11) eine vorbestimmte Zeit innerhalb des Vorgärraums verweilt, und wobei die Formstation (14) einen Stempel (16) zur Einprägung eines Musters auf der Oberseite der sich noch in den muldenartigen Vertiefungen (12) der Vorgärkästen (11) befindlichen Teigportionen, und die Wendestation (15) eine Einrichtung zum Wenden der Vorgärkästen samt Teigportionen um 180° und Ablage derselben auf einen Gärgutträger (24) aufweist, auf dem die Teigportionen endgegart werden, um dann nach einer vorbestimmten Endgarzeit und einem erneuten Stürzen um 180° auf Backblechen abgelegt und in einen Backofen verbracht zu werden,
**dadurch gekennzeichnet**,
daß die Vorgärkästen (11) lose übereinander und nebeneinander gestapelt sowie relativ zueinander vertikal und horizontal verschiebbar durch den Vorgärraum, insbesondere Vorgärschrank (10) hindurch bewegbar sind, wobei sie zu diesem Zweck wenigstens einmal vertikal auf- und ab- sowie in der jeweils tiefsten und höchsten Position horizontal verschiebbar sind, und daß sich an die Wendestation (15) ein Magazin (17) für die entleerten Vorgärkästen (11) anschließt, durch das die Vorgärkästen zurück zu einer dem Vorgärraum, insbesondere Vorgärschrank (10) vorgeordneten Teigbeschickungseinrichtung (19) bewegbar sind.

2. Vorrichtung nach Anspruch 1,
**dadurch gekennzeichnet**,
daß der der Formstation (14) zugeordnete Stempel (16) im Bereich einer sich an den Vorgärraum, insbesondere an einen Auslaß (20) des Vorgärschranks (10), anschließenden horizontalen Transportstrecke (18) der Vorgärkästen (11) wirksam ist.

3. Vorrichtung nach einem der Ansprüche 1 oder 2,
**dadurch gekennzeichnet**,
daS für den Transport der Vorgärkästen (11) durch den Vorgärraum, insbesondere Vorgärschrank (10), hindurch wechselweise betätigte Vertikalantriebe (V₁, V₂) und Horizontalantriebe (H₁, H₂, H₃) vorgesehen sind, wobei die Vertikalführung der Vorgärkästen (11) im Vorgärraum entweder durch gegenseitige Horizontalabstützung der Vorgärkästen selbst innerhalb eines mehrere Stapel von Vorgärkästen aufnehmenden Schachtes, durch sich vertikal erstreckende Transportschächte oder durch den stirnseitigen Enden der Vorgärkästen (11) zugeordnete Führungsschienen oder dgl. gebildet ist.

4. Vorrichtung nach einem der Ansprüche 1 bis 3,
**dadurch gekennzeichnet**,
daß die Vorgärkästen mäanderförmig durch den Vorgärraum, insbesondere Vorgärschrank (10) bewegbar sind, wobei zur vertikalen Bewegung der Vorgärkästen (11) nach oben ein jeweils nur am untersten Vorgärkasten angreifender Vertikalantrieb (V₁, V₂) vorgesehen ist, der die übereinander gestapelten Vorgärkästen jeweils um eine Kastenhöhe nach oben bewegt, so daß unter dem jeweils angebhobenen Kastenstapel ein nachfolgender Vorgärkasten mittels eines zugeordneten Horizontalantriebs (H₁, H₃) schiebbar ist, und daß gleichzeitig oder unmittelbar darauffolgend der oberste Vorgärkasten des jeweils angehobenen Kastenstapels mittels eines weiteren zugeordneten Horizontalantriebs (H₂) in den Bereich der benachbarten Vorgärkastenstapel zur schrittweisen Bewegung desselben nach unten bringbar ist.

5. Vorrichtung nach einem der Ansprüche 1 bis 3,
**dadurch gekennzeichnet**,
daß die Vorgärkästen (11) mit Ausnahme des ersten Vorgärkastenstapels schicht- bzw. zeilenweise durch den Vorgärraum, insbesondere Vorgärschrank (10), hindurch nach unten bewegbar sind, wobei zur vertikalen Bewegung der Vorgärkästen (11) nach oben ein am untersten Vorgärkasten des ersten Vorgärkastenstapels angreifender Vertikalantrieb vorgesehen ist, der die übereinander gestapelten Vorgärkästen des ersten Vorgärkastenstapels jeweils um eine Kastenhöhe nach oben bewegt, so daß in dem frei gewordenen Vorgärkastenplatz des ersten Vorgärkastenstapels ein nachfolgender Vorgärkasten (11) mittels eines zugeordneten Horizontalantriebs (H₁) schiebbar ist, gleichzeitig oder unmittelbar darauffolgend der oberste Vorgärkasten des ersten Vorgärkastenstapels mittels eines weiteren zugeordneten Horizontalantriebs (H'₂) in Richtung zum letzten Vorgärkastenstapel hin um eine Vorgärkastenbreite verschiebbar ist, und wobei mittels eines dritten Horizontalantriebs (H'₃) die untersten Vorgärkästen eines jeden Vorgärkastenstapels mit Ausnahme des ersten Vorgärkastenstapels aus dem Vorgärraum, insbesondere Vorgärschrank (10), verschiebbar sind.

6. Vorrichtung nach einem der Ansprüche 1 bis 5,
**dadurch gekennzeichnet**,
daß für den Transport der entleerten Vorgärkästen (11) im Magazin (17) ebenfalls abwechselnd betätigte Horizontalantriebe (H₆, H₇) und Vertikalantriebe (V₅) vorgesehen sind, wobei die gegenseitige Abstützung und die vorzugsweise mäanderförmige als auch zeilen- bzw. schichtartige Führung der Vorgärkästen innerhalb des Magazins (17) in gleicher Weise wie im Vorgärraum, insbesondere Vorgärschrank (10) gebildet ist.

7. Vorrichtung nach Anspruch 6,
**dadurch gekennzeichnet**,
daß zur vertikalen Bewegung der entleerten Vorgärkästen (11) im Magazin (17) nach oben ein jeweils nur am untersten Vorgärkasten angreifender Vertikalantrieb (V₅) vorgesehen ist, der die übereinander gestapelten Vorgärkästen (11) jeweils um eine Kastenhöhe nach oben bewegt, so daß unter dem jeweils angehobenen Kastenstapel ein nachfolgender Vorgärkasten mittels eines zugeordneten Horizontalantriebs (H₇) bewegbar ist, und daß gleichzeitig oder unmittelbar darauffolgend der oberste Vorgärkasten des jeweils angehobenen Vorgärkastenstapels mittels eines gesonderten zugeordneten Horizontalantriebs (H₆) in den Bereich des benachbarten Vorgärkastenstapels zur schrittweisen Bewegung nach unten bringbar ist.

8. Vorrichtung nach Anspruch 6,
**dadurch gekennzeichnet**,
daß zur horizontalen Bewegung der obersten Vorgärkästen des Magazins (17) in Richtung zum letzten Vorgärkastenstapel hin um eine Vorgärkastenbreite ein erster Horizontalantrieb (H'₆) und zur horizontalen Bewegung der untersten Vorgärkästen des Magazins (17) aus dem Magazin ein zweiter Horizontalantrieb (H'₇) derart vorgesehen sind, daß die Vorgärkästen (11) im Magazin schrittweise schicht- bzw. zeilenförmig nach unten bringbar sind.

9. Vorrichtung nach einem der Ansprüche 1 bis 8,
**dadurch gekennzeichnet**,
daß sowohl im Vorgärraum, insbesondere Vorgärschrank (10), als auch im Magazin (17) die Bewegung der Vorgärkästen (11) nach unten jeweils durch ihr Eigengewicht bedingt ist, wobei zumindest bei der mäanderartigen Bewegungsform der Vorgärkästen (11) ein gesamter Kastenstapel nach Entfernung des untersten Vorgärkastens jeweils um eine Kastenhöhe nach unten fällt bzw. rutscht.

10. Vorrichtung nach einem der Ansprüche 1 bis 9,
**dadurch gekennzeichnet**,
daß die Verbindung zwischen der Vorgärkasten-Wendestation (15) und dem Magazin (17) durch eine vertikale Transportstrecke, insbesondere einen vertikalen Transportschacht, gebildet ist, in dem die entleerten Vorgärkästen durch ihr Eigengewicht bedingt schrittweise nach unten rutschen.

11. Vorrichtung nach einem der Ansprüche 1 bis 10,
**dadurch gekennzeichnet**,
daß das Magazin (17) auf Rollen oder Rädern verfahrbar ist, so daß es als Ganzes austauschbar ist.

12. Vorrichtung insbesondere nach einem oder mehreren der Ansprüche 1 bis 11,
**dadurch gekennzeichnet**,
daß die Endgärstation eine Vielzahl von jeweils brettartig ausgebildeten und um ihre Längsachse (27) drehbar gelagerten Gärgutträgern (24) aufweist, die durch eine Einrichtung zur Aufnahme der Gärgutträger, insbesondere in Form eines in einem Endgärraum verfahrbaren Gärwagens (23), hindurch bewegbar sind.

13. Vorrichtung nach Anspruch 12,
**dadurch gekennzeichnet**,
daß die Gärgutträger (24) an ihren Stirnseiten jeweils gondelartig gelagert sind, wobei die Drehlagerung (25) jeweils innerhalb rechteckförmiger Scheiben (26) ausgebildet ist, die zugleich als gärgutträgerseitige Führungselemente für die Bewegung der Gärgutträger (24) durch den Gärwagen (23) hindurch dienen.

14. Vorrichtung nach Anspruch 13,
**dadurch gekennzeichnet**,
daß den Gärgutträgern (24) jeweils stirnseitig angreifende Antriebseinrichtungen zum Anheben und/oder seitlichen Versetzen der lose über- und nebeneinander angeordneten Gärgutträger (24) zugeordnet sind.

15. Vorrichtung nach einem der Ansprüche 12 bis 14,
**dadurch gekennzeichnet**,
daß die Gärgutträger (24) mäanderförmig durch die Einrichtung zur Aufnahme der Gärgutträger bewegbar sind.

16. Vorrichtung nach Anspruch 15,
**dadurch gekennzeichnet**,
daß dem der Wendestation (15) unmittelbar nachgeordneten bzw. ersten Stapel (28) von Gärgutträgern (24) ein am untersten Gärgutträger dieses Stapels angreifender Vertikalantrieb (29) zum Anheben dieses Gärgutträgerstapels um jeweils eine Trägerhöhe zugeordnet ist, während dem bezüglich der Wendestation (25) letzten Stapel (30) von Gärgutträgern ein am untersten Gärgutträger dieses Stapels angreifender Horizontalantrieb (31) zur seitlichen bzw. horizontalen Versetzung dieses Gärgutträgers um eine Trägerbreite in Richtung zum ersten Gärgutträgerstapel (28) hin zugeordnet ist, und daß zwischen dem ersten (28) und letzten (31) Gärgutträgerstapel am jeweils zweituntersten Gärgutträger angreifende Einrichtungen zum Anheben (32) eines jeden zweiten Grägutträgerstapels sowie zum seitlichen Versetzen (33) des diesem Stapel jeweils benachbarten zweituntersten Gärgutträgers in den durch die Anhebung des vorgenannten Gärgutträgerstapels frei gewordenen Raum hinein vorgesehen sind, wobei zwischen dem letzten und dem ersten Gärgutträgerstapel eine gerade Anzahl von weiteren Gärgutträgerstapeln angeordnet ist, und wobei dem ersten Gärgutträgerstapel (28) benachbarten Gärgutträgerstapel eine Einrichtung zur horizontalen Versetzung des zweituntersten Gärgutträgers zugeordnet ist, während dem dem letzten Gärgutträgerstapel (30) benachbarten Gärgutträgerstapel eine Einrichtung zum Anheben dieser Stapel zugeordnet ist.

17. Vorrichtung nach einem der Ansprüche 12 bis 14,
**dadurch gekennzeichnet**,
daß zum schicht- bzw. zeilenweisen Transport der Gärgutträger (24) durch den Gärwagen (23) dem der Wendestation (15) unmittelbar nachgeordneten bzw. ersten Stapel (28) von Gärgutträgern (24) ein am untersten Gärgutträger dieses Stapels angreifender Vertikalantrieb (29) zum Anheben dieses Gärgutträgerstapels um jeweils eine Gärgutträgerhöhe zugeordnet ist, während den untersten Gärgutträgern aller nachfolgenden Gärgutträgerstapel ein Horizontalantrieb (31) zur seitlichen bzw. horizontalen Versetzung dieser Gärgutträger (24) um eine Trägerbreite in Richtung zum ersten Gärgutträgerstapel (28) hin zugeordnet ist, und daß dem obersten Gärgutträger des ersten Gärgutträgerstapels (28) ein weiterer Horizontalantrieb (51) zur seitlichen bzw. horizontalen Versetzung der obersten Gärgutträgerreihe um jeweils eine Gärgutträgerbreite in Richtung zum letzten Gärgutträgerstapel (30) hin zugeordnet ist, so daß die Einrichtung zur Aufnahme der Gärgutträger schichtweise bzw. zeilenweise beschickbar ist.

18. Vorrichtung nach einem der Ansprüche 12 bis 17,
**dadurch gekennzeichnet**,
daß die Gärgutträger (24) stirnseitig Lagerzapfen (38) aufweisen, die in den zugeordneten Lagerscheiben (26) so drehgelagert sind, daß ihre stirnseitigen Enden für form- und/oder kraftschlüssig angreifende Gärgutträger-Wendeelemente (39) zugänglich sind.

19. Vorrichtung nach Anspruch 18,
**gekennzeichnet durch**
eine Einrichtung mit einer Vielzahl von Gärgutträger-Wendeelementen (39) entsprechend der Anzahl und Anordnung der Gärgutträger (24) innerhalb des Gärwagens (23) oder dgl., so daß diese bei Anschluß der Wendeelemente (39) an die Lagerzapfen (38) der Gärgutträger (24) unter gleichzeitigem Abwurf der gegarten Teigportionen auf jeweils unter den Gärgutträgern (24) eingeschobene Backbleche (43) gemeinsam um 180° stürzbar sind.

## Claims

1. Device for raising portions of dough with a
- pre-raising station,
- shaping (14) and turning station (15) and
- final raising arrangement (23),
the pre-raising station comprising a plurality of elongate pre-raising boxes (11) with trough-like recesses (12) for respectively receiving a portion of dough, and a drive system for moving the pre-raising boxes (11), with trough-like recesses (12) for respectively receiving a portion of dough through a pre-raising chamber, particularly a pre-raising cabinet (10), in such a way that each pre-raising box (11) resides for a predetermined time within the pre-raising chamber, and the shaping station (14) having a stamp (16) for impressing a pattern on the upper side of the portions of dough which are still located in the trough-like recesses (12) of the pre-raising boxes (11), and the turning station (15) having an arrangement for turning the pre-raising boxes together with the portions of dough through 180° and depositing the same on a raising material carrier (24) upon which the portions of dough are finally raised, and then after a predetermined final raising period and renewed rotation through 180° they are deposited on baking plates and brought into a baking oven,
characterised in that
the pre-raising boxes (11) are stacked loosely one above the other and next to one another and, movable relative to one another vertically and horizontally, are movable through the pre-raising chamber, particularly pre-raising cabinet (10) for this purpose being movable at least once vertically upwards and downwards and horizontally in the respectively lowest and highest position, and in that following the turning station (15) is a magazine (17) for the emptied pre-raising boxes (11), by means of which the pre-raising boxes are movable back to a dough supply arrangement (19) preceding the pre-raising chamber, in particular pre-raising cabinet (10).

2. Device according to Claim 1,
characterised in that
the stamp (16) associated with the shaping station (14) is effective in the region of a horizontal transport path (18) of the pre-raising boxes (11) which connects to the pre-raising chamber, particularly to an outlet (20) of the pre-raising cabinet (10).

3. Device according to one of Claims 1 or 2,
characterised in that
in order to transport the pre-raising boxes (11) through the pre-raising chamber, particularly the pre-raising cabinet (10), alternately-actuated vertical drive systems (V₁, V₂) and horizontal drive systems (H₁, H₂), are provided, the vertical guidance for the pre-raising boxes (11) in the pre-raising chamber being formed either by mutual horizontal support of the pre-raising boxes themselves within a shaft receiving a plurality of stacks of pre-raising boxes, through vertically-extending transport shafts or through the guide rails or the like associated with the terminal ends of the pre-raising boxes (11).

4. Device according to one of Claims 1 to 3,
characterised in that
the pre-raising boxes are movable in a meandering fashion through the pre-raising chamber, particularly pre-raising cabinets (10), there being provided, for vertical movement of the pre-raising boxes (11) in an upward direction, a vertical drive system (V₁, V₂) engaging respectively only on the lowermost pre-raising box, which moves the pre-raising boxes stacked one above the other respectively by one box height upwards, so that a subsequent pre-raising box can be pushed under the respectively raised box stack by means of an associated horizontal drive system (H₁, H₃), and in that, simultaneously or immediately thereafter, the uppermost pre-raising box of the respectively lifted box stack can be brought downwards into the region of the adjacent stack of pre-raising boxes for progressive movement of the same by means of a further associated horizontal drive system (H₂).

5. Device according to one of Claims 1 to 3,
characterised in that
the pre-raising boxes (11), with the exception of the first stack of pre-raising boxes, are movable downwards in a layered or linear fashion through the pre-raising chamber, particularly pre-raising cabinet (10), there being provided, for vertical movement of the pre-raising boxes (11) upwards, a vertical drive engaging on the lowermost pre-raising box of the first stack of pre-raising boxes, said vertical drive system moving the pre-raising boxes stacked one above the other of the first stack of pre-raising boxes upwards by a respective box height, so that a subsequent pre-raising box (11) may be pushed into the released box place of the first box stack by means of an associated horizontal drive system (H₁), and simultaneously or immediately thereafter the uppermost pre-raising box of the first box stack may be pushed by means of a further associated horizontal drive system (H'₂) in the direction of the last box stack by one box width, and by means of a third horizontal drive system (H'₃) the lowermost pre-raising boxes of each box stack, with the exception of the first box stack, may be pushed out of the pre-raising chamber, particularly pre-raising cabinet (10).

6. Device according to one of Claims 1 to 5,
characterised in that
for transport of the emptied pre-raising boxes (11) in the magazine (17), likewise alternately-actuated horizontal drive systems (H₆, H₇) and vertical drive systems (V₅) are provided, the mutual support and preferably meandering and also linear or layer-like guidance of the pre-raising boxes within the magazine (17) being formed in the same way as in the pre-raising chamber, particularly the pre-raising cabinet (10).

7. Device according to Claim 6,
characterised in that
for vertical movement of the emptied pre-raising boxes (11) in the magazine (17) in an upward direction, there is provided a vertical drive system (V₅) engaging only on the lowermost pre-raising box, and which moves the pre-raising boxes (11) stacked one above the other respectively by one box height upwards, so that a subsequent pre-raising box may be moved under the respectively lifted box stack by means of an associated horizontal drive system (H₇), and in that, simultaneously or immediately thereafter, the uppermost pre-raising box of the respectively lifted box stack can be brought downwards into the region of the adjacent box stack for progressive movement downward by means of a separate associated horizontal drive (H₆).

8. Device according to Claim 6,
characterised in that
for horizontal movement of the uppermost pre-raising boxes of the magazine (17) in the direction of the last box stack by a box width, there is provided a first horizontal drive (H'₆), and for horizontal movement of the lowermost pre-raising boxes of the magazine (17) out of the magazine, a second horizontal drive system (H'₇) is provided, in such a way that the pre-raising boxes (11) in the magazine can be brought downwards progressively in a layered or linear fashion.

9. Device according to one of Claims 1 to 8,
characterised in that
both in the pre-raising chamber, particularly pre-raising cabinet (10) and in the magazine (17), the downward movement of the pre-raising boxes (11) is respectively constrained by their intrinsic weight, an entire box stack, at least in the meander-like form of movement of the pre-raising boxes (11), after removal of the lowermost pre-raising box, drops or slips downwards respectively by one box height.

10. Device according to one of Claims 1 to 9,
characterised in that
the connection between the pre-raising box turning station (15) and the magazine (17) is formed by a vertical transport path, particularly a vertical transport shaft, in which the emptied pre-raising boxes, constrained by their intrinsic weight, progressively slip downwards.

11. Device according to one of Claims 1 to 10,
characterised in that
the magazine (17) is movable on rollers or wheels, so that it may be interchanged as a unit.

12. Device in particular according to one or more of Claims 1 to 11,
characterised in that
the final raising station has a plurality of respectively board-shaped raising material carriers (24) mounted to be rotatable about their longitudinal axis (27), and which are movable through an arrangement for receiving the raising material carriers, particularly in the form of a raising carriage (23), which can travel in a final raising chamber.

13. Device according to Claim 12,
characterised in that
the raising material carriers (24) are mounted at their end sides respectively in a gondola fashion, the rotational bearing (25) being respectively formed within rectangular plates (26) which simultaneously serve as guide members on the side of the raising material carriers for movement of said raising material carriers (24) through the raising carriage (23).

14. Device according to Claim 13,
characterised in that
there are respectively associated with the raising material carriers (24) drive devices, engaging on the end sides, for lifting and/or displacing the raising material carriers (24), which are disposed loosely one above the other and next to one another.

15. Device according to one of Claims 12 to 14,
characterised in that
the raising material carriers (24) are movable in a meandering fashion through the arrangement for receiving the raising material carriers.

16. Device according to Claim 15,
characterised in that
there is associated with the stack (28) of raising material carriers (24), immediately subsequent to the turning station (15), or the first stack (28) of such raising material carriers (24), a vertical drive system (29) engaging on the lowermost raising material carrier of this stack in order to lift this raising material stack respectively by one carrier height, whilst there is associated with the last stack (30) of raising material carriers relative to the turning station (25) a horizontal drive system (31) engaging on the lowermost raising material carrier of this stack for lateral or horizontal displacement of this raising material carrier by one carrier width in the direction of the first raising material carrier stack (28), and in that there are provided between the first (28) and last (31) stacks of raising material carriers arrangements engaging on the respectively second-lowest raising material carrier for lifting (32) each second stack of raising material carriers and for lateral displacement (33) of the second-lowest raising material carrier adjacent to this stack into the space released by lifting of the above named stack of raising material carriers, an even number of further stacks of raising material carriers being disposed between the last and the first stack of carriers and there being associated with the stack of raising material carriers, adjacent to the first stack of raising material carriers (28), an arrangement for horizontal displacement of the second-lowest raising material carrier, while there is associated with the stack of raising material carriers adjacent to the last stack (30) of raising material carriers an arrangement for lifting this stack.

17. Device according to one of Claims 1 to 14,
characterised in that,
for layered or linear transport of the raising material carriers (24) through the raising carriage (23), there is associated with the stack (28) of raising material carriers (24) immediately subsequent to the turning station (15), or the first said stack (28), a vertical drive system (29) engaging on the lowermost raising material carrier of this stack for lifting this raising material stack respectively by one carrier height, while there is associated with the lowermost raising material carriers of all subsequent stacks of raising material carriers a horizontal drive system (31) for lateral or horizontal displacement of these raising material carriers (24) by one carrier width in the direction of the first stack (28) of raising material carriers, and in that there is associated with the uppermost raising material carrier of the first stack (28) of raising material carriers a further horizontal drive system (51) for lateral or horizontal displacement of the uppermost row of raising material carriers respectively by a carrier width in the direction of the last stack (30) of raising material carriers, so that the arrangement for receiving the raising material carriers may be supplied in a layered or linear fashion.

18. Device according to one of Claims 12 to 17,
characterised in that
the raising material carriers (24) have on the ends bearing journals (38), which are rotarily mounted in the associated bearing plates (26) in such a way that their terminal ends are accessible for raising material carrier turning members (39) engaging form-lockingly and/or power-lockingly.

19. Device according to Claim 18,
characterised by
an arrangement with a plurality of turning members (39) for raising material carriers corresponding to the number and disposition of the raising material carriers (24) within the raising carriage (23) or the like, so that, when the turning members (39) are connected to the bearing journals (38) of the raising material carriers (24) these, simultaneously throwing off the raised portions of dough, can be turned in common through 180° on to baking plates (43) respectively inserted under the raising material carriers (24).

## Revendications

1. Dispositif pour faire lever des portions de pâte comportant
- un poste de fermentation préalable,
- un poste de mise en forme (14) et un poste de retournement (15), et
- un poste de fermentation finale (23),
- dans lequel le poste de fermentation préalable comprend une multiplicité de boîtes allongées de fermentation préalable (11) comportant des renfoncements en forme d'auges (12) servant à loger chacun une portion de pâte, ainsi qu'un dispositif d'entraînement pour déplacer les boîtes de fermentation préalable (11) pourvues des renfoncements en forme d'auges (12) servant chacune à loger une portion de pâte, à travers une chambre de fermentation préalable, notamment une armoire de fermentation préalable (10), de telle sorte que chaque boîte de fermentation préalable (11) séjourne pendant un intervalle de temps déterminé dans la chambre de fermentation préalable, et dans lequel le poste de mise en forme (14) porte un poinçon (16) pour imprimer un modèle sur la face supérieure des portions de pâte encore situées dans les renfoncements en forme d'auges (12) des boîtes de fermentation préalable (11) et le poste de retournement (15) comporte un dispositif servant à retourner les boîtes de fermentation préalable y compris les portions de pâte sur 180° et les déposer sur un support (24) supportant un produit soumis à la fermentation et sur lequel les portions de pâte subissent une fermentation finale, pour ensuite, après une durée prédéterminée de fermentation finale et un nouveau retournement sur 180°, sur des plaques de cuisson et être amenées dans un four,
caractérisé en ce
que les boîtes de fermentation préalable (11) peuvent être empilées de façon lâche les unes au-dessus des autres et les unes à côté des autres et peuvent être déplacées à travers la chambre de fermentation préalable, notamment l'armoire de fermentation préalable (10), en étant déplaçables verticalement et horizontalement les unes par rapport aux autres, les boîtes pouvant, à cet effet, être soulevées et abaissées au moins une fois verticalement et pouvant être déplacées horizontalement respectivement dans la position la plus basse et dans la position la plus élevée, et qu'au poste de retournement (15) succède un magasin (17) servant à ranger les boîtes vides de fermentation préalable (11) et à travers lequel les boîtes de fermentation préalable peuvent être ramenées à un dispositif de chargement de pâte (19) situé en amont de la chambre de fermentation préalable, notamment de l'armoire de fermentation préalable (10).

2. Dispositif selon la revendication 1, caractérisé en ce que le poinçon (16) associé au poste de mise en forme (14) agit dans la zone d'une section horizontale (18) de transport des boîtes de fermentation préalable (11), qui se raccorde à la chambre de fermentation préalable, notamment à une sortie (20) de l'armoire de fermentation préalable (10).

3. Dispositif selon l'une des revendications 1 ou 2, caractérisé en ce que pour le transport des boîtes de fermentation préalable (11) dans la chambre de fermentation préalable, notamment dans l'armoire de fermentation préalable (10), il est prévu des dispositifs d'entraînement vertical (V₁, V₂) et des dispositifs d'entraînement horizontal (H₁, H₂, H₃), qui peuvent être actionnés alternativement, le système de guidage vertical des boîtes de fermentation préalable (11) étant formé soit par un support horizontal réciproque des boîtes de fermentation préalable elles-mêmes à l'intérieur d'un conduit recevant plusieurs piles de boîtes de fermentation préalable, par des conduits verticaux de transport ou par des rails de guidage ou analogues, qui sont associés aux extrémités frontales des boîtes de fermentation préalable (11).

4. Dispositif selon l'une des revendications 1 à 3, caractérisé en ce que les boîtes de fermentation préalable sont déplaçables selon un trajet sinueux à travers la chambre de fermentation préalable, notamment l'armoire de fermentation préalable (10), auquel cas pour le déplacement vertical des boîtes de fermentation préalable (11) vers le haut, il est prévu un dispositif d'entraînement vertical (V₁, V₂), qui agit respectivement seulement sur la boîte de fermentation préalable la plus basse et qui déplace vers le haut respectivement d'une hauteur de boîte les boîtes de fermentation préalable empilées en superposition, de sorte qu'une boîte suivante de fermentation préalable peut être amenée au-dessous de la pile respectivement soulevée de boîtes, au moyen d'un dispositif d'entraînement horizontal associé (H₁, H₃), et que simultanément ou aussitôt après la boîte la plus haute de fermentation préalable de la pile de boîtes respectivement soulevée peut être amenée au moyen d'un autre dispositif d'entraînement horizontal associé (H₂), au voisinage de la pile voisine de boîtes de fermentation préalable, de manière à réaliser un abaissement pas-à-pas de cette pile.

5. Dispositif selon l'une des revendications 1 à 3, caractérisé en ce qu'à l'exception de la première pile de boîtes de fermentation préalable, les boîtes de fermentation préalable (11) peuvent être déplacées vers le bas couche après couche ou ligne par ligne à travers la chambre de fermentation préalable, notamment l'armoire de fermentation préalable (10), auquel cas, pour le déplacement vertical des boîtes de fermentation préalable (11) vers le haut, il est prévu un dispositif d'entraînement vertical, qui agit sur la boîte la plus basse de fermentation préalable de la première pile de boîtes de fermentation préalable et qui déplace vers le haut respectivement d'une hauteur de boîte les boîtes de fermentation préalable, qui sont empilées en superposition, de la première pile de boîtes de fermentation préalable de sorte qu'une boîte suivante de fermentation préalable (11) est repoussée à la place devenue libre de la boîte de fermentation préalable de la première pile de boîtes de fermentation préalable, au moyen d'un dispositif d'entraînement horizontal associé (H₁), tandis que simultanément ou aussitôt après la boîte la plus élevée de fermentation préalable de la première pile de boîtes de fermentation préalable peut être déplacée, au moyen d'un autre dispositif d'entraînement horizontal associé (H'₂), d'une largeur d'une boîte de fermentation préalable, en direction de la dernière pile de boîtes de fermentation préalable, et qu'à l'exception de la première pile de boîtes de fermentation préalable, les boîtes de fermentation préalable les plus basses des différentes piles de boîtes de fermentation préalable peuvent être repoussées au moyen d'un troisième dispositif d'entraînement horizontal (H'₃), hors de la chambre de fermentation préalable, notamment hors de l'armoire de fermentation préalable (10).

6. Dispositif selon l'une des revendications 1 à 5, caractérisé en ce que pour le transport des boîtes vides de fermentation préalable (11) dans le magasin (17) il est également prévu des dispositifs d'entraînement horizontal (H₆, H₇) et des dispositifs d'entraînement vertical (V₁), actionnés alternativement, le soutien réciproque et le guidage de préférence suivant un trajet sinueux et également suivant des lignes et des couches, des boîtes de fermentation préalable étant assuré à l'intérieur du magasin (17) de la même manière que dans la chambre de fermentation préalable, notamment dans l'armoire de fermentation préalable (10).

7. Dispositif selon la revendication 6, caractérisé en ce que pour le déplacement vertical des boîtes vides de fermentation préalable (11) vers le haut dans le magasin (17), il est prévu un dispositif d'entraînement vertical (V₅), qui agit respectivement sur la boîte de fermentation préalable la plus basse et qui déplace respectivement d'une hauteur de boîte, vers le haut, les boîtes de fermentation préalable (11) empilées en superposition, de sorte qu'une boîte suivante de fermentation préalable peut être amenée au-dessous de la pile de boîtes respectivement soulevée, à l'aide d'un dispositif d'entraînement horizontal associé (H₇), et que simultanément ou aussitôt après la boîte de fermentation préalable la plus élevée de la pile de boîtes de fermentation préalable respectivement soulevée peut être abaissée, au moyen d'un dispositif d'entraînement horizontal associé particulier (H₆), dans la zone de la pile voisine de boîtes de fermentation préalable, pour obtenir un déplacement pas-à-pas.

8. Dispositif selon la revendication 6, caractérisé en ce que pour le déplacement horizontal de la boîte de fermentation préalable la plus élevée du magasin (17) en direction de la dernière pile de boîtes de fermentation préalable, et ce d'une largeur de boîte de fermentation préalable, il est prévu un premier dispositif d'entraînement horizontal (H'₆) et que pour le déplacement horizontal des boîtes de fermentation préalable les plus basses du magasin (17) à partir de ce dernier il est prévu un second dispositif d'entraînement horizontal (H'₇) de sorte que les boîtes de fermentation préalable (11) peuvent être abaissées pas-à-pas dans le magasin couche après couche ou ligne après ligne.

9. Dispositif selon l'une des revendications 1 à 8, caractérisé en ce qu'aussi bien dans la chambre de fermentation préalable, notamment dans l'armoire de fermentation préalable (10), ainsi que dans le magasin (17), le déplacement descendant des boîtes de fermentation préalable (11) est produit respectivement sous l'effet de leur poids propre, auquel cas au moins dans la forme de déplacement de type sinueux des boîtes de fermentation préalable (11), l'ensemble d'une pile de boîtes descend ou glisse vers le bas, respectivement d'une hauteur de boîte, après retrait de la boîte inférieure de fermentation préalable.

10. Dispositif selon l'une des revendications 1 à 9, caractérisé en ce que la liaison entre le poste (15) de retournement des boîtes de fermentation préalable et le magasin (17) est formée par une section verticale de transport, notamment un conduit vertical de transport, dans lequel les boîtes vides de fermentation préalable descendent pas-à-pas en glissant, sous l'effet de leur poids propre.

11. Dispositif selon l'une des revendications 1 à 10, caractérisé en ce que le magasin (17) peut être déplacé sur des roues ou sur des roulettes de sorte qu'il peut être remplacé dans son ensemble.

12. Dispositif selon une ou plusieurs des revendications 1 à 11, caractérisé en ce que le poste de fermentation finale comporte une multiplicité de supports (24) pour des produits soumis à la fermentation, qui sont agencés respectivement sous la forme de planches et sont montés de manière à pouvoir tourner autour de leur axe longitudinal (27) et qui sont déplaçables à travers un dispositif servant à recevoir les supports de produits soumis à la fermentation, notamment sous la forme d'un chariot de fermentation (23) déplaçable dans la chambre de fermentation finale.

13. Dispositif selon la revendication 12, caractérisé en ce que les supports (24) des produits soumis à la fermentation sont montés respectivement à la manière d'une nacelle au niveau de leurs faces frontales, le palier de support en rotation (25) étant formé respectivement à l'intérieur de disques rectangulaires (26), qui servent simultanément d'éléments de guidage, du côté des supports (24) des produits soumis à la fermentation, pour déplacer ces supports à l'intérieur des chariots de fermentation (23).

14. Dispositif selon la revendication 23, caractérisé en ce qu'aux supports (24) des produits soumis à la fermentation sont associés des dispositifs d'entraînement respectifs, qui sont montés frontalement et servent à soulever et/ou à décaler latéralement les supports (24) des produits soumis à la fermentation, qui sont disposés de façon lâche en superposition et côte-à-côte.

15. Dispositif selon l'une des revendications 12 à 14, caractérisé en ce que les supports (24) des produits soumis à la fermentation sont déplaçables selon un trajet sinueux dans le dispositif servant à recevoir les supports des produits soumis à la fermentation.

16. Dispositif selon la revendication 15, caractérisé en ce qu'à la pile (28) de supports (24) de produits soumis à la fermentation, qui est située directement en aval du poste de retournement (15), ou première pile, est associé un dispositif d'entraînement vertical (29), qui agit sur le support le plus bas de produit soumis à la fermentation de cette pile, et qui sert à soulever cette pile de supports de produits soumis à la fermentation, respectivement de la hauteur d'un support, tandis qu'à la pile (30) de supports de produits soumis à la fermentation, qui est la dernière par rapport au poste de retournement (25), est associé un dispositif d'entraînement horizontal (31), qui agit sur le support le plus bas de produit soumis à la fermentation de cette pile, pour déplacer latéralement ou horizontalement ce support de produit soumis à la fermentation, sur une largeur de support, en direction de la première pile (28) de supports de produits soumis à la fermentation, et qu'entre la première pile (28) et la dernière pile (31) de supports de produits soumis à la fermentation, il est prévu des dispositifs, qui agissent sur respectivement le support inférieur en second de produits soumis à la fermentation et qui servent à soulever (32) chaque seconde pile de supports de produits soumis à la fermentation ainsi que pour décaler latéralement (33) le support de produit soumis à la fermentation, qui est le plus bas en second et est voisin respectivement de cette pile, dans l'espace libéré par le soulèvement de la pile indiquée précédemment de supports de produits soumis à la fermentation, auquel cas un nombre paire d'autres piles de support de produits soumis à la fermentation sont disposées entre la dernière et la première pile de supports de produits soumis à la fermentation, et à la première pile (28) de supports de produits soumis à la fermentation parmi les piles voisines de supports de produits soumis à la fermentation est associé un dispositif servant à décaler horizontalement le support le plus bas en second de produits soumis à la fermentation, tandis qu'à la pile de supports de produits soumis à la fermentation, qui est voisine de la dernière pile (30) de supports de produits soumis à la fermentation, est associée un dispositif servant à soulever cette pile.

17. Dispositif selon l'une des revendications 12 à 14, caractérisé en ce que pour le transport couche par couche ou ligne par ligne des supports (24) de produits soumis à la fermentation à travers le chariot de fermentation (23), à la pile (28) de supports (24) de produits soumis à la fermentation, qui est située directement en aval du poste de retournement (15), ou première pile, est associé un dispositif d'entraînement vertical (29), qui attaque le support le plus bas de produit soumis à la fermentation, de cete pile pour soulever cette dernière respectivement d'une hauteur d'un support de produit soumis à la fermentation, tandis qu'aux supports les plus bas de produits soumis à la fermentation de toutes les piles suivantes de supports de produits soumis à la fermentation est associé un dispositif d'entraînement horizontal (31) servant à décaler latéralement ou horizontalement ces supports (24) de produits soumis à la fermentation, et ce d'une largeur du support, en direction de la première pile (28) de supports de produits soumis à la fermentation, et qu'au support le plus haut de produits soumis à la fermentation de la première pile (28) de supports de produits soumis à la fermentation est associé un autre dispositif d'entraînement horizontal (51) servant à décaler latéralement ou horizontalement la rangée la plus élevée de supports de produits soumis à la fermentation, et ce d'une largeur de support pour produits soumis à la fermentation en direction de la dernière pile (30) de supports de produits soumis à la fermentation de sorte que le dispositif servant à recevoir les supports de produits soumis à la fermentation peut être chargé couche par couche ou ligne par ligne.

18. Dispositif selon l'une des revendications 12 à 17, caractérisé en ce que les supports (24) de produits soumis à la fermentation possèdent frontalement des tourillons (38), qui sont montés de manière à pouvoir tourner dans les flasques de palier associés (26) de sorte que leurs extrémités frontales sont accessibles pour des éléments (39) de retournement des supports de produits soumis à la fermentation, qui agissent selon une liaison par formes complémentaires et/ou selon une liaison de force.

19. Dispositif selon la revendication 18, caractérisé par un dispositif comportant une multiplicité d'éléments (39) de retournement de supports de produits soumis à la fermentation, qui correspond au nombre et à la disposition des supports (24) de produits soumis à la fermentation à l'intérieur du chariot de fermentation (23) ou analogue de sorte que, lors du raccordement des éléments de retournement (39) aux tourillons (38) des supports (24) des produits soumis à la fermentation, les éléments de retournement peuvent être retournés en commun de 180° moyennant une éjection simultanée des portions de pâte fermentée sur des plaques de cuisson respectives (43), insérées au-dessous des supports (24) de produits soumis à la fermentation.
